# EUROPEAN PATENT SPECIFICATION

(11) **EP 3 458 491 B1**
(45) Date of publication and mention of the grant of the patent: **25.03.2026**
(21) Application number: 17723418.4
(22) Date of filing: 18.05.2017
(51) Int. Cl.: C08G 18/48, C08G 18/50, C08G 18/76, C08G 18/79, C08K 5/09, C08G 18/18, C08G 18/22, C08G 18/40, C08G 18/42

(54) **PROCESS FOR PREPARING POLYISOCYANURATE RIGID FOAMS**
VERFAHREN ZUR HERSTELLUNG VON POLYISOCYANURATHARTSCHÄUMEN
PROCÉDÉ DE PRÉPARATION DE MOUSSES DE POLYISOCYANURATE RIGIDE

(30) Priority: 18.05.2016 EP 16170077
(43) Date of publication of application: 27.03.2019
(73) Proprietor: BASF SE, 67056 Ludwigshafen am Rhein (DE)
(72) Inventor: TOMASI, Gianpaolo, 49448 Lemfoerde (DE); WINDELER, Ludwig, 49448 Marl (DE); KAMPF, Gunnar, 49448 Lemfoerde (DE); GAUKESBRINK, Ulrich, 49448 Lemfoerde (DE)
(74) Representative: BASF IP Association
(86) International application number: PCT/EP2017/061911
(87) International publication number: WO 2017/198747

(56) References cited:
- US-A- 5 214 076
- US-A1- 2006 052 467

## Description

The present invention relates to a process for preparing a rigid polyisocyanurate foam comprising reacting a composition (A) comprising a polyesterol, a blowing agent wherein formic acid is the sole blowing agent, or formic acid as a mixture with water without physical blowing agents, a catalyst system comprising at least one trimerization catalyst and at least one polyisocyanate as component (B), wherein composition (A) further comprises at least one polyether alcohol prepared by addition of alkylene oxides to toluenediamine. The present invention further relates to a rigid polyisocyanurate foam obtained or obtainable by the process of the present invention and the use of said rigid polyisocyanurate foam as insulating material.

Polyisocyanurate foams, in particular rigid polyisocyanurate foams, have been known for a long time and have been described widely in the literature. An important field of application of the rigid polyisocyanurate foams is in composite elements. They are usually produced by reacting polyisocyanates with compounds having hydrogen atoms which are reactive toward isocyanate groups, usually polyetherols, polyesterols or both, with the isocyanate index being 180 or above. This results in formation of not only the urethane structures which are formed by reaction of isocyanates with compounds having reactive hydrogen atoms but also, due to reaction of the isocyanate groups with one another, isocyanurate structures.

For the purposes of the present invention, polyisocyanurates are polymeric isocyanate adducts which comprise not only urethane groups but also further groups.

For the purposes of the present invention, the isocyanate index is the stoichiometric ratio of isocyanate groups to groups which are reactive toward isocyanate, multiplied by 100. Groups which are reactive toward isocyanate are, for the inventive purposes, all groups which are comprised in the reaction mixture and are reactive toward isocyanate, including chemical blowing agents, but not the isocyanate group itself.

For the purposes of the invention, a rigid polyisocyanurate foam is a foamed polyisocyanurate, preferably a foam in accordance with DIN 7726, i.e. the foam has a compressive stress at 10% deformation or compressive strength in accordance with DIN 53 421/DIN EN ISO 604 of greater than or equal to 80 kPa, preferably greater than or equal to 150 kPa, particularly preferably greater than or equal to 180 kPa. Furthermore, the rigid polyisocyanurate foam has a proportion of closed cells in accordance with DIN ISO 4590 of greater than 85%, preferably greater than 90%.

In general, both blowing and gelling catalysts, usually amines, and trimerization catalysts are used as catalysts in the production of rigid polyisocyanurate foams. Catalyst systems comprising a mixture of various catalysts are also found in the prior art.

These rigid polyisocyanurate foams are usually produced using physical and chemical blowing agents. For the purposes of the present invention, chemical blowing agents are compounds which form gaseous products by reaction with isocyanate. Physical blowing agents are compounds which are dissolved or emulsified in the starting materials for polyurethane production and vaporize under the conditions of polyurethane formation. Possible chemical blowing agents are in particular water and also carboxylic acids. Physical blowing agents used are, for example, chlorofluorocarbons, hydrofluorocarbons, hydrocarbons and liquid CO₂.

Rigid isocyanurate foams are preferably produced by a continuous process, for example by the double belt process. The use of water as chemical blowing agent in the production of rigid polyisocyanurate foams is subject to restrictions, since a considerable amount of isocyanate is consumed in the reaction with isocyanate to generate the blowing gas.

The use of carboxylic acids, primarily formic acid, as chemical blowing agents for preparing polyurethane foams has likewise been known for a long time.

US 5,143,945 describes the production of a polyisocyanurate foam using a trimerization catalyst and the blowing agents water and formic acid.

US 5,214,076 describes the production of an open-celled carbodiimideisocyanurate foam from aromatic polyesterols and aromatic amine polyetherols in the presence of a blowing agent which may comprise formic acid and a blowing catalyst, for example pentamethyldiethylenetriamine.

EP 1435366 describes the use of a novolak polyetherol for producing rigid polyisocyanurate and polyurethane-modified polyisocyanurate foams blown by means of formic acid in both batch and continuous processes. Here, it is possible to use one or more catalysts, for example amine catalysts such as pentamethyldiethylenetriamine and tin catalysts such as tin salts of carboxylic acids.

To improve the burning properties of the foams obtained, polyesterols are used as polyols in the preparation process. However, the compositions comprising the catalyst system, polyesterols and formic acid as a blowing agent have only a limited storage stability.

It was an object of the present invention to provide a process for the preparation of rigid polyisocyanurate foams which avoids these disadvantages.

According to the present invention, this object was solved by a process for preparing a rigid polyisocyanurate foam comprising reacting
(A) a composition (A) comprising
   a polyesterol,
   a blowing agent wherein formic acid is the sole blowing agent, or formic acid as a mixture with water without physical blowing agents,
   a catalyst system comprising at least one trimerization catalyst
      and
(B) at least one polyisocyanate as component (B)
wherein composition (A) further comprises at least one polyether alcohol prepared by addition of alkylene oxides to toluenediamine.

It was surprisingly found that the storage stability of composition (A) comprising a polyesterol, a blowing agent, wherein formic acid is the sole blowing agent, or formic acid as a mixture with water without physical blowing agents, and a catalyst system comprising at least one trimerization catalyst could be improved by the addition of at least one polyether alcohol prepared by addition of alkylene oxides to toluenediamine. Furthermore, the rigid polyisocyanurate foams obtained by this process have good burning properties. The foams obtained according to the process of the present invention have good mechanical properties and excellent properties as thermal insulation material.

According to the process of the present invention, a composition (A) comprising a polyesterol, a blowing agent comprising formic acid, a catalyst system comprising at least one trimerization catalyst, and at least one polyether alcohol prepared by addition of alkylene oxides to toluenediamine is reacted with at least one polyisocyanate as component (B).

Composition (A) comprises at least one polyether alcohol prepared by addition of alkylene oxides to toluenediamine (TDA). In the preparation of the polyether alcohol, it is in principle possible to use all isomers of TDA. It is possible to use a mixture which does not comprise any o-TDA. Preference is given to mixtures which comprise at least 25% by weight, based on the weight of the TDA, of o-TDA, also referred to as vicinal TDA. In a particularly preferred embodiment of the invention, the mixtures of TDA isomers comprise at least 95% by weight, based on the weight of the TDA, of vicinal TDA. The polyether alcohols are prepared by addition of ethylene oxide, propylene oxide and mixtures thereof onto TDA. When ethylene oxide and propylene oxide are used, the alkylene oxides can be added on either individually in succession or in a mixture with one another. In one embodiment, ethylene oxide is added on first and propylene oxide is then added on. The addition reaction of the ethylene oxide is preferably carried out in the absence of a catalyst and the addition reaction of the propylene oxide is carried out in the presence of a basic catalyst.

The polyether alcohol preferably has a hydroxyl number in the range from 100 to 600, preferably 150 to 500.

Thus, according to a further embodiment, the present invention is directed to a process for preparing a rigid polyisocyanurate foam as disclosed above, wherein the polyether alcohol prepared by addition of alkylene oxides to toluenediamine has a hydroxyl number in the range from 100 to 600.

Composition (A) further comprises at least one polyesterol. In particular, compounds having from 1.5 to 8 OH groups are used. These polyesterols particularly preferably have from 1.5 to 8, in particular from 2 to 4 OH groups in the molecule. The hydroxyl number of the polyesterols used in the production of rigid polyisocyanurate foams is preferably from 100 to 850 mg KOH/g, particularly preferably from 100 to 400 mg KOH/g and in particular from 150 to 300 mg KOH/g. The molecular weights are preferably greater than 400 g/mol.

The polyester alcohols used are usually prepared by condensation of polyfunctional alcohols having from 2 to 12 carbon atoms, for example ethylene glycol, diethylene glycol, butanediol, trimethylolpropane, glycerol or pentaerythritol, with polyfunctional carboxylic acids having from 2 to 12 carbon atoms, for example succinic acid, glutaric acid, adipic acid, suberic acid, azelaic acid, sebacic acid, decanedicarboxylic acid, maleic acid, fumaric acid, phthalic acid, isophthalic acid, terephthalic acid, the recyclates of polyethylene terephthalate and the isomers of naphthalene dicarboxylic acids, preferably phthalic acid, isophthalic acid, terephthalic acid, the recyclates of polyethylene terephthalate and the isomers of naphthalenedicarboxylic acids or their anhydrides. Particular preference is given to polyesterols prepared from phthalic anhydride and/or terephthalic acid and/or recyclates of polyethylene terephthalate.

As further starting materials in the preparation of polyesters, it is also possible to make concomitant use of hydrophobic substances. The hydrophobic substances are water-insoluble substances which comprise a nonpolar organic radical and have at least one reactive group selected from among hydroxyl, carboxylic acid, carboxylic ester or mixtures thereof. The equivalent weight of the hydrophobic materials is in the range from 130 to 1000 g/mol. It is possible to use, for example, fatty acids such as stearic acid, oleic acid, palmitic acid, lauric acid or linoleic acid and also fats and oils such as castor oil, maize oil, sunflower oil, soybean oil, coconut oil, olive oil or tall oil. If polyesters comprise hydrophobic substances, the proportion of hydrophobic substances based on the total monomer content of the polyester alcohol is preferably from 1 to 30 mol %, particularly preferably from 4 to 15 mol %.

The polyesterols used preferably have a functionality of 1.5 to 5, particularly preferably 1.5 to 4.

Thus, according to a further embodiment, the present invention is directed to a process for preparing a rigid polyisocyanurate foam as disclosed above, wherein the polyesterol is selected from the group consisting of polyesterols prepared from phthalic acid or terephthalic acid or a derivative thereof.

Composition (A) can comprise the polyesterol in suitable amounts. Composition (A) can for example comprise the polyesterol in an amount in a range of from 10 to 90 % by weight based on the total weight of composition (A), preferably in a range of from 20 to 80 % by weight based on the total weight of composition (A). Usually, composition (A) comprises the polyether alcohol prepared by addition of alkylene oxides to toluenediamine in an amount in a range of from 1 to 30 % by weight based on the total weight of composition (A), preferably in a range of from 2 to 20 % by weight based on the total weight of composition (A). In the context of the present invention, the amount of all components of composition (A) adds up to 100 % by weight if not otherwise noted. Composition (A) can comprise further components.

Composition (A) may further comprises at least one compound having at least two groups which are reactive toward isocyanate groups. Possible compounds having groups which are reactive toward isocyanate, i.e. hydrogen atoms which are reactive toward isocyanate groups, are, in particular, compounds which bear at least 1.5, for example from 1.5 to five, preferably two or three, reactive groups selected from among OH groups, SH groups, NH groups, NH₂ groups and CH-acid groups, preferably OH groups, in the molecule. Here, the number of reactive groups in the molecule is to be regarded as a mean over the number of molecules having hydrogen atoms which are reactive toward isocyanate groups.

In particular, compounds having from 1.5 to 8 OH groups are used. Preference is given to using polyetherols, polyesterols or both.

Polyether polyols can be prepared by known methods, for example from one or more alkylene oxides having from 2 to 4 carbon atoms in the alkylene radical by anionic polymerization using alkali metal hydroxides such as sodium or potassium hydroxide or alkali metal alkoxides such as sodium methoxide, sodium or potassium ethoxide or potassium isopropoxide as catalysts with addition of at least one starter molecule comprising from 2 to 8, preferably from 2 to 4, reactive hydrogen atoms in bound form or by cationic polymerization using Lewis acids such as antimony pentachloride, boron fluoride etherate or bleaching earth as catalysts.

Suitable alkylene oxides are, for example, tetrahydrofuran, 1,3-propylene oxide, 1,2- or 2,3-butylene oxide, styrene oxide and preferably ethylene oxide and 1,2-propylene oxide, particularly preferably ethylene oxide. The alkylene oxides can be used individually, alternately in succession or as mixtures.

Possible starter molecules are, for example, ethylene glycol, diethylene glycol, glycerol, trimethylolpropane, pentaerythritol, sucrose, sorbitol, methylamine, ethylamine, isopropylamine, butylamine, benzylamine, aniline, toluidine, toluenediamine, naphthylamine, ethylenediamine, diethylenetriamine, 4,4'-methylenedianiline, 1,3-propanediamine, 1,6-hexanediamine, ethanolamine, diethanolamine, triethanolamine and also other dihydric or polyhydric alcohols or monofunctional or polyfunctional amines. Preference is given to using ethylene glycol, diethylene glycol, glycerol, trimethylolpropane and toluenediamine.

According to the present invention, composition (A) may also comprise compounds having two or more free hydroxyl groups. These compounds are preferably free of other functional groups or reactive groups, such as acid groups. Preferably, a polyol may be used, for example a polyether polyol or a polyester polyol. Examples thereof are a polyoxyalkylene, a polyoxyalkenyl, a polyester diol, a polyesterol, a polyether glycol, especially a polypropylene glycol, a polyethylene glycol, a polypropylene glycol, a polypropylene ethylene glycol, or mixtures thereof. A mixture can be understood as meaning for example a copolymer, but also a mixture of polymers.

It is also possible to use chain extenders and/or crosslinkers. Chain extenders and/or crosslinkers used are, in particular, bifunctional or trifunctional amines and alcohols, in particular diols, triols or both, in each case having molecular weights of less than 400, preferably from 60 to 300.

As blowing agent, use is made of a blowing agent wherein formic acid is the sole blowing agent, or formic acid as a mixture with water without physical blowing agents. According to the present invention, formic acid can be used which contains small amounts of water, such as 5 to 20% by weight.

In a preferred embodiment, the blowing agent comprises no water apart from a water content of not more than 2.0% by weight. The total water content of the composition (A) is preferably less than 2.0% by weight, more preferable less than 1.5% by weight, particularly preferably less than 1.0% by weight, in each case based on the total weight of composition (A).

Thus, according to a further embodiment, the present invention is directed to a process for preparing a rigid polyisocyanurate foam as disclosed above, wherein the composition (A) comprises less than 2.0% by weight of water.

The blowing agent is usually used in an amount of from 2 to 30% by weight, preferably from 2.5 to 25% by weight and particularly preferably from 3 to 20% by weight, based on the total weight of the composition (A).

The amount of formic acid in composition (A) is preferably in the range of from 0.5 to 7% by weight, preferably in the range of from 1 to 6% by weight, particularly preferably in the range of from 2 to 5% by weight.

Thus, according to a further embodiment, the present invention is directed to a process for preparing a rigid polyisocyanurate foam as disclosed above, wherein the blowing agent comprises formic acid and physical blowing agents.

Composition (A) further comprises a catalyst system comprising at least one trimerization catalyst. The catalyst system may, if appropriate, comprise a further catalyst component.

Suitable trimerization catalysts are compounds which catalyze the reaction of the NCO groups with one another. Mention may be made by way of example of metal salts, especially ammonium, alkali metal or alkaline earth metal salts of carboxylic acids. Preference is given to using the salts of linear or branched, substituted or unsubstituted, saturated or unsaturated aliphatic or aromatic carboxylic acids having from 1 to 20 carbon atoms, for example formic acid, acetic acid, octanoic acid, tartaric acid, citric acid, oleic acid, stearic acid and ricinoleic acid, or substituted or unsubstituted, aromatic carboxylic acids having from 6 to 20 carbon atoms, e.g. benzoic acid and salicylic acid. Particular preference is given to potassium formate, potassium acetate, potassium octoate, ammonium formate, ammonium acetate and ammonium octoate, in particular potassium formate.

Thus, according to a further embodiment, the present invention is directed to a process for preparing a rigid polyisocyanurate foam as disclosed above, wherein the trimerization catalyst is selected from the group consisting of potassium formate, potassium acetate, potassium octanoate, ammonium formate, ammonium acetate, ammonium octanoate and mixtures thereof.

According to a further embodiment, the present invention is directed to a process for preparing a rigid polyisocyanurate foam as disclosed above, wherein the trimerization catalyst is potassium formate.

Furthermore, the catalyst may comprise amine-comprising catalysts which likewise catalyze the trimerization reaction of the NCO groups with one another. These include, for example, 1,3,5-tris(3-dimethylaminopropyl)hexahydro-s-triazine, tris-3-dimethylaminopropylamine, pentamethyldipropylenetriamine and 2,4,6-tris(dimethylaminoethyl)phenol.

As a further catalyst component, the catalyst system may comprise an amine compound which has a maximum of 6 nitrogen atoms trimerization catalyst. Suitable catalysts are compounds which comprise 1, 2, 3, 4, 5 or 6 nitrogen atoms and less than 5 oxygen atoms. Particular preference is given to using N-methyldiethanolamine, hexamethyl-triethylenetetramine, pentamethyldiethylenetriamine, bis(dimethylaminoethyl)ether, N,N,N-trimethylaminoethylethanolamine, N,N-dimethylaminoethyl N-methyl-N-hydroxyethylaminoethyl ether, N,N-dimethylaminoethoxyethanol, N,N-bis(3-dimethylaminopropyl)amino-2-propanolamine, tetramethylhexamethylenediamine, tris-3-dimethylaminopropylamine, dimethylethanolamine, triethylamine, dimethylcyclohexylamine, pentamethyldipropylenetriamine, N-methylimidazole, 1,3,5-tris(3-dimethylaminopropyl)hexahydro-s-triazine, 2,4,6-tris(dimethylaminoethyl)-phenol, N-dimethylaminopropylurea or bis-(N-dimethylaminopropyl)urea. In particular, use is made of bis(dimethylaminoethyl)ether, N,N,N-trimethylaminoethylethanolamine, N,N-dimethylaminoethoxyethanol or dimethylethanolamine.

Preference is given to using mixtures of potassium formate and a further catalyst component selected from the group of N,N,N-trimethylaminoethylethanolamine, N,N-dimethylaminoethoxyethanol or dimethylethanolamine, in particular N,N,N-trimethylaminoethylethanolamine.

The amount of the trimerization catalyst in composition (A) generally is in the range of from 0.2 to 5 % by weight preferably in the range of from 0.5 to 4% by weight.

Thus, according to a further embodiment, the present invention is directed to a process for preparing a rigid polyisocyanurate foam as disclosed above, wherein the catalyst system comprises a further catalyst component which is an amine compound which has a maximum of 6 nitrogen atoms.

Composition (A) can comprise further compounds which can usually be additionally used in the production of polyisocyanurates. These comprise foam stabilizers, flame retardants and other additives, for example further catalysts and antioxidants.

Foam stabilizers are substances which promote the formation of a regular cell structure during foam formation.

Examples which may be mentioned are: silicone-comprising foam stabilizers such as siloxaneoxyalkylene copolymers and other organopolysiloxanes. Also alkoxylation products of fatty alcohols, oxo alcohols, fatty amines, alkylphenols, dialkylphenols, alkylcresols, alkylresorcinol, naphthol, alkylnaphthol, naphthylamine, aniline, alkylaniline, toluidine, bisphenol A, alkylated bisphenol A, polyvinyl alcohol and also alkoxylation products of condensation products of formaldehyde and alkylphenols, formaldehyde and dialkylphenols, formaldehyde and alkylcresols, formaldehyde and alkylresorcinol, formaldehyde and aniline, formaldehyde and toluidine, formaldehyde and naphthol, formaldehyde and alkylnaphthol and also formaldehyde and bisphenol A, and mixtures of two or more of these foam stabilizers.

Foam stabilizers are preferably used in an amount of 0.5-4% by weight, particularly preferably 1-3% by weight, based on the total weight of the composition (A).

Flame retardants which can be used are the flame retardants in general which are known from the prior art. Suitable flame retardants are, for example, brominated ethers (Ixol B 251), brominated alcohols such as dibromoneopentyl alcohol, tribromoneopentyl alcohol and PHT-4-diol, and also chlorinated phosphates such as tris(2-chloroethyl)phosphate, tris(2-chloroisopropyl)phosphate (TCPP), tris(1,3-dichloroisopropyl)phosphate, tris(2,3-dibromopropyl)phosphate and tetrakis(2-chloroethyl)ethylenediphosphate, or mixtures thereof.

Apart from the halogen-substituted phosphates mentioned above, it is also possible to use inorganic flame retardants such as red phosphorus, preparations comprising red phosphorus, expandable graphite, aluminum oxide hydrate, antimony trioxide, arsenic oxide, ammonium polyphosphate and calcium sulfate or cyanuric acid derivatives such as melamine or mixtures of at least two flame retardants such as ammonium polyphosphates and melamine and also, if appropriate, starch for making the rigid polyisocyanurate foams produced according to the invention flame resistant.

As further liquid halogen-free flame retardants, it is possible to use diethyl ethanephosphonate (DEEP), triethyl phosphate (TEP), dimethyl propylphosphonate (DMPP), diphenyl cresyl phosphate (DPC) and others.

Preference is given to using tris(2-chloroisopropyl)phosphate (TCPP), diethyl ethanephosphonate (DEEP), or diphenyl cresyl phosphate (DPC). In a particularly preferred embodiment, only halogen-free flame retardants are used.

The flame retardants are, for the purposes of the present invention, preferably used in an amount of from 0 to 60% by weight, particularly preferably from 5 to 50% by weight, more preferably from 10 to 40% by weight, based on the total weight of the composition (A).

In addition, the customary fillers can be used.

Thus, according to a further embodiment, the present invention is directed to a process for preparing a rigid polyisocyanurate foam as disclosed above, wherein composition (A) comprises a further component selected from stabilizers, flame retardants and other additives.

According to the process of the present invention, composition (A) is reacted with at least one polyisocyanate as component (B). For the purposes of the present invention, at least one polyisocyanate component, herein also referred to as component (B), comprises polyfunctional aromatic and/or aliphatic isocyanates, for example diisocyanates.

In principle, it is possible to use all known organic diisocyanates and polyisocyanates. Specifically, the customary aliphatic, cycloaliphatic and in particular aromatic diisocyanates and/or polyisocyanates are used. It is preferable for the suitable polyfunctional isocyanates to comprise on average from 2 to not more than 4 NCO groups. Examples of suitable isocyanates are 1,5-naphthylene diisocyanate, xylylene diisocyanate (XDI), tetramethylxylylene diisocyanate (TMXDI), diphenyldimethylmethane diisocyanate derivatives, di- and tetraalkyldiphenylmethane diisocyanate, 4,4-dibenzyl diisocyanate, 1,3-phenylene diisocyanate, 1,4-phenylene diisocyanate, the isomers of tolylene diisocyanate (TDI), optionally in admixture, 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), chlorinated and brominated diisocyanates, phosphorus-containing diisocyanates, 4,4-diisocyanatophenyl-perfluorethane, tetramethoxybutane 1,4-diisocyanate, butane 1,4-diisocyanate, hexane 1,6-diisocyanate (HDI), dicyclohexylmethane diisocyanate, cyclohexane 1,4-diiso-cyanate, ethylene diisocyanate, bisisocyanatoethyl phthalate, also polyisocyanates with reactive halogen atoms, such as 1-chloromethylphenyl 2,4-diisocyanate, 1-bromo-methylphenyl 2,6-diisocyanate, 3,3-bischloromethyl ether 4,4-diphenyl diisocyanate.

Preference is given to using diphenylmethane diisocyanate (MDI) and in particular crude MDI, i.e. mixtures of diphenylmethane diisocyanate and polyphenylene-polymethylene polyisocyanates, known as polymeric MDI. The isocyanates can also be modified, for example by incorporation of uretdione, carbamate, isocyanurate, carbodiimide, allophanate and in particular urethane groups.

To produce rigid polyisocyanurate foams, particular preference is given to using crude MDI.

Furthermore, prepolymers can be used as isocyanate component. These prepolymers are prepared from the above-described isocyanates and the polyethers or polyesters described below or both and have an NCO value of from 20 to 30, preferably from 25 to 30. Isocyanurate structures can already be comprised in these prepolymers.

Thus, according to a further embodiment, the present invention is directed to a process for preparing a rigid polyisocyanurate foam as disclosed above, wherein the polyisocyanate is an aromatic polyisocyanate.

It may be advantageous for the polyisocyanate component to have an isocyanate group functionality in the range from 1.8 to 5.0, more preferably in the range from 1.9 to 3.5 and most preferably in the range from 2.0 to 3.0.

To produce the rigid polyisocyanurate foams, according to the present invention the polyisocyanates (B) and the composition (A) preferably are reacted in such amounts that the isocyanate index is from 150 to 500, preferably from 160 to 400, in particular from 180 to 350.

Thus, according to a further embodiment, the present invention is directed to a process for preparing a rigid polyisocyanurate foam as disclosed above, wherein to produce the rigid polyisocyanurate foams, the composition (A) and (B) are reacted in such amounts that the isocyanate index is from 150 to 500.

The rigid polyisocyanurate foams can be produced batchwise or continuously with the aid of known processes. The invention described here relates to both processes.

In a batchwise process, the starting components are usually mixed at a temperature of from 15 to 35°C, preferably from 20 to 30°C. Mixing of the starting components can be carried out with the aid of known mixing apparatuses.

For example in a continuous process such as the double belt process, an upper covering layer and a bottom covering layer, for example layers of metal, aluminum foil or paper, are rolled off a roll and, if appropriate, profiled, heated and corona-treated in order to improve the ability to apply foam to the covering layers. The reaction mixture comprising the components a) to d) and, if appropriate, e) is then mixed, for example in a high-pressure mixing head, applied to the bottom covering layer and cured between the upper and lower covering layer in what is known as the double belt. The elements are subsequently cut to the desired length. If appropriate, a primer is additionally applied to the bottom covering layer before application of the rigid polyisocyanurate foam system.

It has been found to be particularly advantageous to employ the two-component process. For this purpose, the compounds having at least two groups which are reactive toward isocyanates, chemical blowing agents, catalysts and, if appropriate, foam stabilizers, flame retardants and other additives form the polyol component, while the isocyanates used for the reaction form the isocyanate component. Physical blowing agents can be comprised both in the polyol component and the isocyanate component. In the production of the actual rigid polyisocyanurate foam, polyol component and isocyanate component are then reacted with one another.

The blowing agent, in particular formic acid, can be added to the polyol component during the production of the rigid polyisocyanurate foam or before the start of the production of the rigid polyisocyanurate foam. For instance, the blowing agent can also be metered separately into the polyol component.

According to the present invention, the rigid polyisocyanurate foams can be produced with the aid of known mixing apparatuses. Mixing of the starting components can be carried out with the aid of known mixing apparatuses.

The starting components are usually mixed at a temperature of from 15 to 35°C, preferably from 20 to 30°C. The reaction mixture can be mixed by means of high- or low-pressure metering machines.

The density of the rigid foams produced by the process of the invention is from 20 to 400 kg/m³, preferably 30 to 200 kg/m³, more preferably 35 to 100 kg/m³.

In the process of the present invention, a rigid polyisocyanurate foam is obtained. Thus, according to a further aspect, the present invention is also directed to a rigid polyisocyanurate foam obtained or obtainable by a process as disclosed above.

With respect to the preferred compounds used and the reaction conditions, reference is made to the disclosure above.

A rigid foam according to the invention also has particularly good burning properties, measured, for example, when measuring the flame height. The burning properties, such as the flame height are determined according to EN ISO 11925-2. A rigid foam according to the invention preferably has a flame height of less than 15 cm and thus is preferably classifies as class E according to EN ISO 11925-2. Preferably, the rigid foam according to the present invention can be used for producing composites which in turn fulfil the requirements of EN ISO 11925-2.

Furthermore, the rigid polyisocyanurate foams of the invention are good thermal insulation materials for refrigeration appliances, cold storage rooms, containers and buildings. The present invention therefore includes refrigeration appliances, cold storage rooms, containers and buildings which comprise the rigid polyisocyanurate foams of the invention as insulation materials.

According to a further aspect, the present invention is also directed to the use of a rigid polyisocyanurate foam obtained or obtainable according to a process according to the present invention as disclosed above as insulating material.

Examples will be used below to illustrate the invention.

### EXAMPLES

The invention is illustrated by the following examples.

### 1. General procedure

Polyurethane rigid foams 5 to 7, 9 and 11 according to the invention were prepared as well as comparative foams C1 to C4, C8, C10 and C12.

The components reactive towards isocyanates, the foaming agents, catalysts and further components were mixed to give the polyol composition (A-component) which was then foamed with the isocyanate in a ratio of 150 ± 2 (mixing ratio for comparative example C12 100:110).

Foaming was carried out in a cup using a mixer with 1400 rpm and a mixing time of 5 seconds. The free foaming density and the reaction time were determined using the cup test. The cup test was repeated after storage of the polyol composition (A-component) for 1 day, 14 days and 28 days at a temperature of 22 ± 2°C.

The flame height was determined according to EN ISO 11925-2.

### 2. Results

The results are summarized in table 1a and 1b. The results show that the compositions according to the invention have an improved storage stability. The increase of the gel time after storage of the A component for 14 and 28 days is only small. In contrast to this, the comparative examples show an increase of the gel time after storage of the A component for 14 days which makes the use of these systems for foam preparation difficult or impossible.

The burning properties of the foams according to the present invention are good and all polyisocyanurate foams according to the invention fulfill class E of the European standards (flame height < 15 cm).

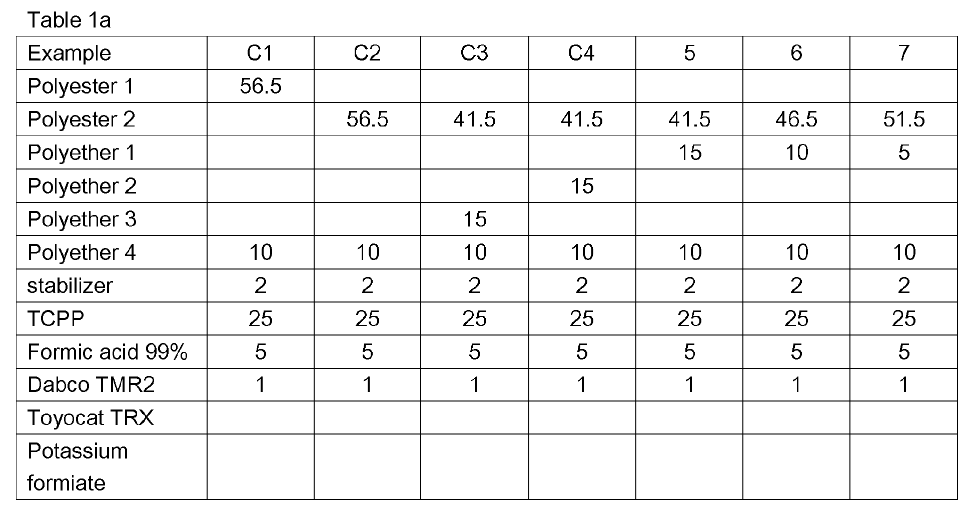

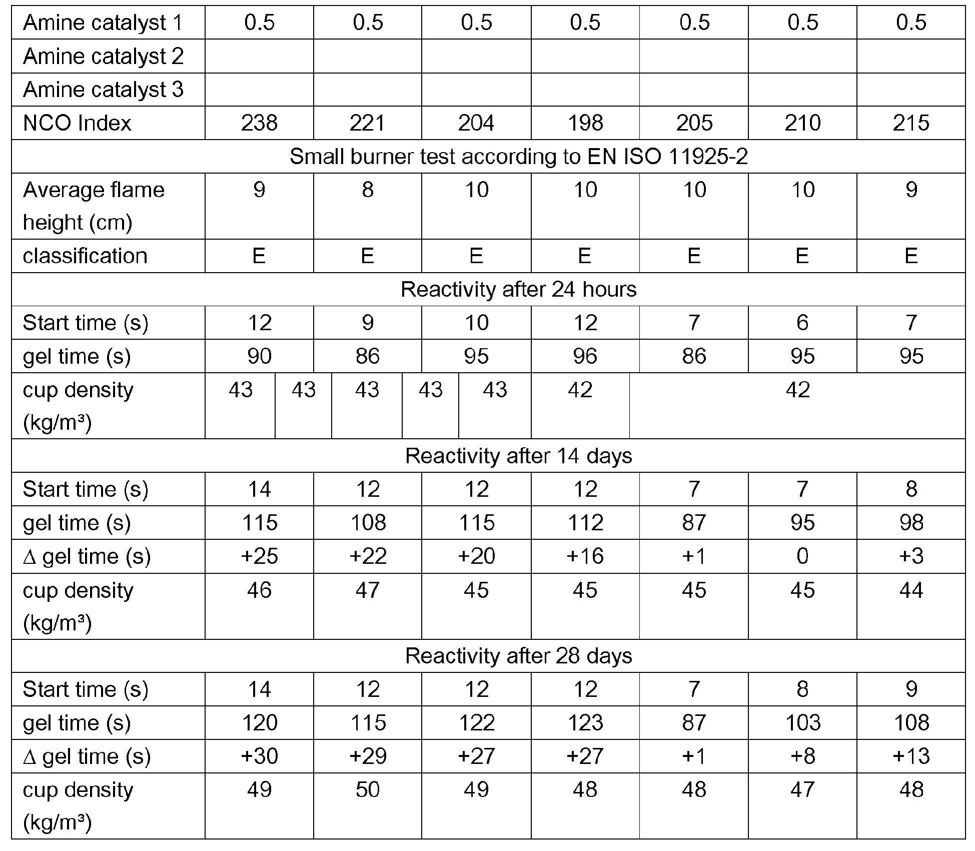

**Table 1b**

| Example | C8 | 9 | C10 | 11 | C12 |
|---|---|---|---|---|---|
| Polyester 1 | 56.9 | 41.9 | 56.8 | 41.8 | 40 |
| Polyester 2 | | | | | |
| Polyether 1 | | 15 | | 15 | |
| Polyether 2 | | | | | |
| Polyether 3 | | | | | 42 |
| Polyether 4 | 10 | 10 | 10 | 10 | |
| stabilizer | 2 | 2 | 2 | 2 | 2 |
| TCPP | 25 | 25 | 25 | 25 | 10 |
| Formic acid 99% | 5 | 5 | 5 | 5 | 5 |
| Dabco TMR2 | | | | | |
| Toyocat TRX | | | 0.7 | 0.7 | |
| Potassium | 0.6 | 0.6 | | | |
| formiate | | | | | |
| Amine catalyst 1 | | | 0.5 | 0.5 | 0.1 |
| Amine catalyst 2 | 0.5 | 0.5 | | | |
| Amine catalyst 3 | | | | | 0.9 |
| NCO Index | 234 | 212 | 235 | 213 | 117 |

| Small burner test according to EN ISO 11925-2 | | | | | |
|---|---|---|---|---|---|
| Average flame height (cm) | 5 | 7 | 9 | 10 | >>15 |
| classification | E | E | E | E | F |

| Reactivity after 24 hours | | | | | |
|---|---|---|---|---|---|
| Start time (s) | 12 | 8 | 12 | 7 | 10 |
| gel time (s) | 88 | 85 | 87 | 82 | 145 |
| cup density (kg/m³) | 41 | 41 | 40 | 42 | 42 |

| Reactivity after 14 days | | | | | |
|---|---|---|---|---|---|
| Start time (s) | 13 | 8 | 14 | 7 | 11 |
| gel time (s) | 112 | 92 | 105 | 86 | 145 |
| Δ gel time (s) | +24 | +7 | +18 | +4 | 0 |
| cup density (kg/m³) | 44 | 43 | 43 | 45 | 42 |

| Reactivity after 28 days | | | | | |
|---|---|---|---|---|---|
| Start time (s) | 13 | 9 | 16 | 7 | 12 |
| gel time (s) | 123 | 94 | 115 | 88 | 148 |
| Δ gel time (s) | +35 | +9 | +28 | +6 | +3 |
| cup density (kg/m³) | 49 | 46 | 44 | 46 | 47 |

### 3. Raw Materials Used

| | |
|---|---|
| Polyester 1: | polyesterol prepared from phthalic anhydride, diethylene glycol, and oleic acid, functionality=2, OHN=210 mg KOH/g |
| Polyester 2: | polyesterol prepared from terephthalic acid, diethylene glycol, and oleic acid, functionality=2.5, OHN=245 mg KOH/g |
| Polyether 1: | polyether prepared from TDA, ethylene oxide and propylene oxide; functionality=3.8, OHN=390 mg KOH/g |
| Polyether 2: | polyetherol prepared from ethylene diamine, and propylene oxide; functionality=3.9, OHN=470 mg KOH/g |
| Polyether 3: | polyetherol prepared from saccharose, pentaerythrite, diethylene glycol, and propylene oxide; functionality=3.9, OHN=403 mg KOH/g |
| Polyether 4: | polyetherol prepared from propylene glycol and propylene oxide, functionality=2, OHN=104 mg KOH/g |
| Stabilizer | Niax silicon L 6900 from company Momentive |
| Flame retardant | TCPP (trischloroisopropyl phosphate) |
| Dabco TMR2: | PIR catalyst from company Air Products |
| Toyocat TRX: | PIR catalyst from company Tosoh |
| Potassium formiate: | 40% in monoethylene glycol |
| Amine catalyst 1: | bis-2-dimethylether 70% in dipropylene glycol |
| Amine catalyst 2: | 2-2-dimethylaminoethylmethyl-amino-ethanol |
| Amine catalyst 3: | N,N-dimethylcyclohexylamine |
| Isocyanate: | Lupranat^{®} M20S from BASF SE, PMDI with an NCO-content of 31 % and an average functionality of 2.7 |

## Claims

1. A process for preparing a rigid polyisocyanurate foam comprising reacting
(A) a composition (A) comprising
a polyesterol,
a blowing agent wherein formic acid is the sole blowing agent, or
formic acid as a mixture with water without physical blowing agents,
a catalyst system comprising at least one trimerization catalyst
and
(B) at least one polyisocyanate as component (B),
wherein composition (A) further comprises at least one polyether alcohol prepared by addition of alkylene oxides to toluenediamine.

2. The process according to claim 1, wherein the rigid polyisocyanurate foam has a proportion of closed cells in accordance with DIN ISO 4590 of greater than 85%.

3. The process according to claim 1 or 2, wherein the rigid polyisocyanurate foam has a compressive strength in accordance with DIN 53 421/DIN EN ISO 604 of greater than or equal to 80 kPa.

4. The process according to any of claims 1 to 3, wherein the polyether alcohol prepared by addition of alkylene oxides to toluenediamine has a hydroxyl number in the range from 100 to 600.

5. The process according to any of claims 1 or 4, wherein the polyesterol is selected from the group consisting of polyesterols prepared from phthalic acid or terephthalic acid or a derivative thereof.

6. The process according to any of claims 1 to 5, wherein the trimerization catalyst is selected from the group consisting of potassium formate, potassium acetate, potassium octanoate, ammonium formate, ammonium acetate, ammonium octanoate and mixtures thereof.

7. The process according to any of claims 1 to 6, wherein the catalyst system comprises a further catalyst component which is an amine compound which has a maximum of 6 nitrogen atoms.

8. The process according to any of claims 1 to 7, wherein the composition (A) comprises less than 2.0% by weight of water.

9. The process according to any of claims 1 to 8, wherein composition (A) comprises a further component selected from stabilizers, flame retardants and other additives.

10. The process according to any of claims 1 to 9, wherein the polyisocyanate is an aromatic polyisocyanate.

11. The process according to any of claims 1 to 10, wherein to produce the rigid polyisocyanurate foams, the composition (A) and (B) are reacted in such amounts that the isocyanate index is from 150 to 500.

12. Rigid polyisocyanurate foam obtained or obtainable by a process according to any one of claims 1 to 11.

13. Use of a a rigid polyisocyanurate foam according to claim 12 as insulating material.

## Patentansprüche

1. Verfahren zur Herstellung eines Polyisocyanurat-Hartschaumstoffs, umfassend Umsetzen
(A) einer Zusammensetzung (A) umfassend
ein Polyesterol,
ein Treibmittel, wobei Ameisensäure das einzige Treibmittel ist, oder
Ameisensäure als ein Gemisch mit Wasser ohne physikalische Treibmittel,
ein Katalysatorsystem umfassend wenigstens einen Trimerisierungskatalysator
und
(B) wenigstens eines Polyisocyanats als Komponente (B), wobei Zusammensetzung (A) ferner wenigstens einen Polyetheralkohol, hergestellt durch Zugeben von Alkylenoxiden an Toluoldiamin, umfasst.

2. Verfahren nach Anspruch 1, wobei der Polyisocyanurat-Hartschaumstoff einen Anteil an geschlossenen Zellen nach DIN ISO 4590 von höher als 85 % aufweist.

3. Verfahren nach Anspruch 1 oder 2, wobei der Polyisocyanurat-Hartschaumstoff eine Druckfestigkeit nach DIN 53 421/DIN EN ISO 604 von höher als oder gleich 80 kPa aufweist.

4. Verfahren nach einem der Ansprüche 1 bis 3, wobei der durch Zugeben von Alkylenoxiden zu Toluoldiamin hergestellte Polyetheralkohol eine Hydroxyzahl in dem Bereich von 100 bis 600 aufweist.

5. Verfahren nach einem der Ansprüche 1 oder 4, wobei das Polyesterol ausgewählt ist aus der Gruppe bestehend aus Polyesterolen, die hergestellt sind aus Phthalsäure oder Terephthalsäure oder einem Derivat davon.

6. Verfahren nach einem der Ansprüche 1 bis 5, wobei der Trimerisierungskatalysator ausgewählt ist aus der Gruppe bestehend aus Kaliumformiat, Kaliumacetat, Kaliumoctanoat, Ammoniumformiat, Ammoniumacetat, Ammoniumoctanoat und Gemischen davon.

7. Verfahren nach einem der Ansprüche 1 bis 6, wobei das Katalysatorsystem eine weitere Katalysatorkomponente umfasst, die eine Aminverbindung mit höchstens 6 Stickstoffatomen ist.

8. Verfahren nach einem der Ansprüche 1 bis 7, wobei die Zusammensetzung (A) weniger als 2,0 Gew.-% Wasser umfasst.

9. Verfahren nach einem der Ansprüche 1 bis 8, wobei Zusammensetzung (A) eine weitere Komponente ausgewählt aus Stabilisatoren, Flammhemmern und anderen Zusatzstoffen umfasst.

10. Verfahren nach einem der Ansprüche 1 bis 9, das Polyisocynat ein aromatisches Polyisocyanat ist.

11. Verfahren nach einem der Ansprüche 1 bis 10, wobei zur Herstellung der Polyisocyanurat-Hartschaumstoffe die Zusammensetzung (A) und (B) in solchen Mengen umgesetzt werden, dass der Isocyanatindex von 150 bis 500 beträgt.

12. Polyisocyanurat-Hartschaumstoff, erhalten oder erhältlich durch ein Verfahren nach einem der Ansprüche 1 bis 11.

13. Verwendung eines Polyisocyanurat-Hartschaumstoffs nach Anspruch 12 als Isoliermaterial.

## Revendications

1. Procédé de préparation d'une mousse de polyisocyanurate rigide comprenant la réaction de
(A) une composition (A) comprenant
un polyol de polyester,
un agent gonflant, l'acide formique étant le seul agent gonflant, ou
de l'acide formique sous forme d'un mélange avec de l'eau sans agents gonflants physiques,
un système catalyseur comprenant au moins un catalyseur de trimérisation
et
(B) au moins un polyisocyanate en tant que composant (B), dans lequel la composition (A) comprend en outre au moins un alcool de polyéther préparé par l'addition d'oxydes d'alkylène sur la toluènediamine.

2. Procédé selon la revendication 1, dans lequel la mousse de polyisocyanurate rigide a une proportion d'alvéoles fermées selon la norme DIN ISO 4590 supérieure à 85 %.

3. Procédé selon la revendication 1 ou 2, dans lequel la mousse de polyisocyanurate rigide a une résistance à la compression selon la norme DIN 53 421/DIN EN ISO 604 supérieure ou égale à 80 kPa.

4. Procédé selon l'une quelconque des revendications 1 à 3, dans lequel l'alcool de polyéther préparé par l'addition d'oxydes d'alkylène sur la toluènediamine a un indice d'hydroxyle dans la plage allant de 100 à 600.

5. Procédé selon l'une quelconque des revendications 1 ou 4, dans lequel le polyol de polyester est choisi dans le groupe constitué par les polyols de polyesters préparés à partir d'acide phtalique ou d'acide téréphtalique ou d'un dérivé de ceux-ci.

6. Procédé selon l'une quelconque des revendications 1 à 5, dans lequel le catalyseur de trimérisation est choisi dans le groupe constitué par le formiate de potassium, l'acétate de potassium, l'octanoate de potassium, le formiate d'ammonium, l'acétate d'ammonium, l'octanoate d'ammonium et les mélanges de ceux-ci.

7. Procédé selon l'une quelconque des revendications 1 à 6, dans lequel le système catalyseur comprend un composant catalyseur supplémentaire qui est un composé amine qui a un maximum de 6 atomes d'azote.

8. Procédé selon l'une quelconque des revendications 1 à 7, dans lequel la composition (A) comprend moins de 2,0 % en poids d'eau.

9. Procédé selon l'une quelconque des revendications 1 à 8, dans lequel la composition (A) comprend un composant supplémentaire choisi parmi les stabilisants, les agents ignifugeants et d'autres additifs.

10. Procédé selon l'une quelconque des revendications 1 à 9, dans lequel le polyisocyanate est un polyisocyanate aromatique.

11. Procédé selon l'une quelconque des revendications 1 à 10, dans lequel pour produire les mousses de polyisocyanurate rigides, la composition (A) et la composition (B) sont amenées à réagir en quantités telles que l'indice d'isocyanate va de 150 à 500.

12. Mousse de polyisocyanurate rigide obtenue ou pouvant être obtenue par un procédé selon l'une quelconque des revendications 1 à 11.

13. Utilisation d'une mousse de polyisocyanurate rigide selon la revendication 12 en tant que matériau isolant.
